# DEMANDE DE BREVET EUROPEEN

(11) **EP 1 080 987 A1**
(43) Date de publication de la demande: **07.03.2001**
(21) Numéro de dépôt: 00402334.7
(22) Date de dépôt: 22.08.2000
(51) Int. Cl.: B60P 1/14, B62K 5/04, B62K 5/00

(54) **Chariot-porteur automoteur**

(30) Priorité: 06.09.1999 FR 9911247
(71) Demandeur: Pays, Pierre, 43320 Sanssac L'Eglise (FR); Garnier, Christian, 43270 Allegre (FR)
(72) Inventeur: Pays, Pierre, 43320 Sanssac L'Eglise (FR); Garnier, Christian, 43270 Allegre (FR)

(57) **Abrégé**

Ce chariot-porteur permet de transporter de petites charges (env. : 400kg) sur des terrains très variés. Cette invention tient essentiellement dans la forme du châssis qui permet l'utilisation de motorisations (6) et d'essieu-moteurs (9) de grande série et d'un basculement simple de la benne.

Ce châssis est constitué de deux longerons (1), coudés ou cintrés, pour se rejoindre à l'avant, près du pivot de direction (10). Un tablier (15), supportant et protégeant l'ensemble moto-réducteur-inverseur et un arceau (2) de sécurité sont fixés sur ces même longerons. Cet arceau de sécurité (2) protège le chauffeur et sert également de mat de levage pour la benne (12).

## Description

Cette invention concerne la fabrication d'un chariot porteur automoteur visant à remplacer la brouette, le petit tracteur agricole, l'automobile, pour de petits transports de courte distance sur des terrains variés, difficiles, pentus, encombrés, de faible adhérence. Ce chariot-porteur est rustique, maniable, économique, facile d'accès et de conduite.

Ce chariot-porteur est destiné :
**Version 1** (Suspension rigide - Moteur à essence)
   Très courtes distances - Entretien de petits espaces nécessitant des manutentions légères (400kg) - Entretien de murets - Transport de petits débroussaillages, accessoires de parcs et jardins
**Version 2** (Suspension élastique - Moteur diesel - Vitesse supérieure env.: 25km/h)
   Agriculture : Entretien de clôtures - Enlèvement des pierres dans les champs - Surveillance des troupeaux (ramassage des nouveau-nés, des blessés) - Epandage de produits (possibilité de monter des systèmes d'épandage dans, ou, à la place de la benne) - Nettoyage des étables (possibilité de monter une lame de raclage à l'avant).- Entretien de voiries municipales rurales : entretien de murets, aqueducs, clôtures, signalisation, parcs et jardins.

### TECHNIQUE ANTERIEURE:

**Les véhicules existants sont pour l'instant :**
- Des petits camions : Faible capacité de franchissement, carrosserie encombrante, prix élevé.
- Des dérivés de motocyclettes à moteur essence : faible capacité de franchissement, consommation élevée, benne fixe
- Des engins capables d'un bon franchissement mais moteur essence (consommation), sans benne, beaucoup plus difficiles à conduire (forme du châssis).

Pour des raisons de maniabilité, ce chariot-porteur est en tricycle (version à quatre roues possible) :- Essieu arrière moteur situé sous la benne
- Roue-avant-directrice en avant du conducteur commandée par un guidon.
- Le moteur est situé sous le siège du conducteur en avant de la benne .

La caractéristique principale de ce chariot-porteur est son **châssis** qui permet de concilier l'usage d'éléments mécaniques courants : motorisation (6), essieu-moteur (9). Ce châssis permet un accès facile au poste de conduite (plancher plat). Il permet aussi un système très simple pour le basculement de la benne. Le châssis est constitué de deux longerons (1) cintrés ou coudés à l'avant pour se rejoindre près du pivot de direction (10). A l'extrême arrière, les longerons (1) servent de support à l'articulation de la benne.

Au niveau de l'essieu-moteur (9), les longerons (1) servent à l'ancrage de l'essieu-moteur (9) ou à l'ancrage du système de suspension. En avant de la benne (12), les longerons (1) servent aussi de support à un arceau (2) encadrant le siège du conducteur. Le siège est posé sur un cadre boulonné à cet arceau. Sur ce cadre est également fixé le treuil (3) qui permet le basculement de la benne (12) par l'intermédiaire d'un câble (4) et d'une poulie (5). Cet arceau est aussi une sécurité en cas de renversement du chariot-porteur. En avant du siège, le plancher est plat, boulonné à des pattes soudées aux longerons l'extrême avant du châssis, au centre, le pivot de direction (10) permet de faire pivoter la roue avant directrice, à l'aide d'un guidon.

### MOTORISATION :

**Version 1.** Ensemble-moteur (6), réducteur, boite de vitesses d'origine motoculteur d'au moins 5 kW situé sous le siège du conducteur. Transmission du mouvement par arbre et cardans reliant l'essieu-moteur et l'arbre porte-outils du motoculteur.
**Version 2.** Moteur (6) d'origine voiturette, variateur (7) d'origine voiturette, réducteur-inverseur (8) d'origine voiturette, arbre et cardans reliant l'essieu-moteur et le réducteur-inverseur. Les moteurs ou ensembles réducteur-inverseurs sont fixés sur un tablier (15) boulonné aux longerons (1) qui leur sert de protection.

### SUSPENSION :

**Version 1.** Les roues sont reliées au châssis de façon rigide.
**Version 2.** A l'avant-bras oscillant : ressort hélicoïdal, amortisseur hydraulique. A l'arrière : ressorts hélicoïdaux ou à lames ; amortisseurs hydrauliques.

### FREINS :

**Version 1**. A tambours, à commande hydraulique sur les roues arrières, freins de secours et de parking à main, à commande par câbles sur les roues arrières;
**Version 2**. A tambours à commande hydraulique sur les trois roues, frein de secours et de parking à main, à commande par câbles sur les roues arrières.

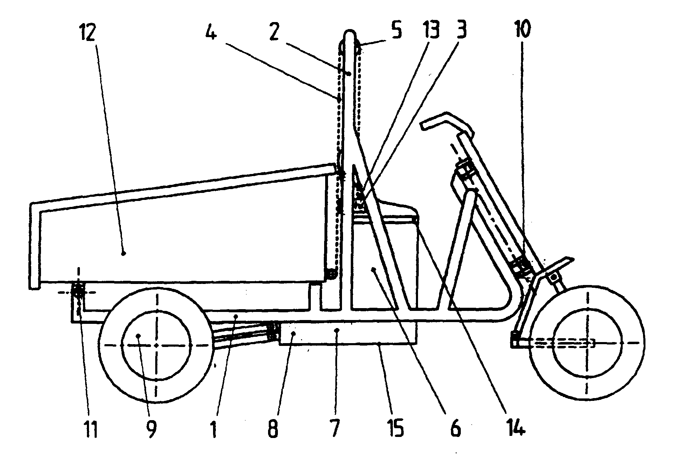

## Revendications

1. Chariot-porteur caractérisé en ce qu'il comporte un châssis dont les deux longerons (1) sont cintrés ou coudés pour se rejoindre au centre à l'avant près du pivot de direction (10) ainsi que d'une benne basculante et d'un tablier protégeant les organes motopropulseurs.

2. Chariot-porteur selon les revendications 1, caractérisé en ce qu'il comporte un arceau de sécurité (2) qui sert de support au cadre (14) portant le siège (13) et le treuil (3), cet arceau étant boulonné ou soudé aux longerons.

3. Chariot-porteur selon la revendication 2, caractérisé en ce que l'arceau de sécurité (2) sert aussi de mat de levage pour le basculement de la benne (12), cet arceau portant à cet effet une poulie de renvoi (5) permettant de soulever l'avant de la benne à l'aide du treuil(3) et du câble (4).

4. Chariot-porteur selon la revendication 1, caractérisé en ce que les longerons (1) du châssis servent de support au plancher du conducteur, permettant un plancher plat et facile d'accès.

5. Chariot-porteur selon la revendication 1, caractérisé en ce que des organes mécaniques moteur (6) et des réducteur-inverseur (8) sont fixés sur un tablier (15) qui leur sert de protection, ce tablier étant boulonné aux longerons.

6. Chariot-porteur selon la revendication 1, caractérisé en ce qu'il comporte, sur le pivot de direction (10), une direction directe en version 3 roues ou commandée par l'intermédiaire de biellettes en version 4 roues.

7. Chariot-porteur selon la revendication 1, caractérisé en ce qu'il comporte sous la benne (12) une poutre transversale reliée en torsion aux flancs de la benne. Cette poutre ayant une forte résistance en torsion permet de lever la benne en charge même si le point d'ancrage du système de levage est fortement décentré.

8. Chariot-porteur selon la revendication 1, caractérisé en ce qu'il comporte un réservoir transversal en avant de l'essieu-moteur, servant aussi à maintenir l'écartement des longerons.
